(19) **Europäisches Patentamt / European Patent Office / Office européen des brevets**

(11) **EP 4 496 112 A1**

(12) **EUROPEAN PATENT APPLICATION**
published in accordance with Art. 153(4) EPC

(43) Date of publication:
**22.01.2025 Bulletin 2025/04**

(21) Application number: **24787041.3**

(22) Date of filing: **31.03.2024**

(51) International Patent Classification (IPC):
**H01M 50/586** (2021.01)     **H01M 50/593** (2021.01)
**H01M 50/15** (2021.01)

(52) Cooperative Patent Classification (CPC):
**H01M 50/15; H01M 50/531; H01M 50/586;**
**H01M 50/593; H01M 50/597**

(86) International application number:
**PCT/CN2024/085122**

(87) International publication number:
**WO 2024/217259 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 21.04.2023  CN 202310459818
           21.04.2023  CN 202320919016 U
           21.04.2023  CN 202320918966 U
           28.09.2023  CN 202322683112 U

(71) Applicant: **Eve Power Co., Ltd.**
**Jingmen, Hubei 448000 (CN)**

(72) Inventors:
• **YUAN, Dingding**
  **Jingmen, Hubei 448000 (CN)**
• **FANG, Zhenxing**
  **Jingmen, Hubei 448000 (CN)**

• **YU, Guoping**
  **Jingmen, Hubei 448000 (CN)**
• **LIN, Chenneng**
  **Jingmen, Hubei 448000 (CN)**
• **CHEN, Xianyang**
  **Jingmen, Hubei 448000 (CN)**
• **SONG, Shuaishuai**
  **Jingmen, Hubei 448000 (CN)**
• **GUO, Jiahao**
  **Jingmen, Hubei 448000 (CN)**
• **CHEN, Liquan**
  **Jingmen, Hubei 448000 (CN)**
• **SUN, Fei**
  **Jingmen, Hubei 448000 (CN)**
• **SONG, Xiangling**
  **Jingmen, Hubei 448000 (CN)**

(74) Representative: **Murgitroyd & Company**
**Murgitroyd House**
**165-169 Scotland Street**
**Glasgow G5 8PL (GB)**

(54) **COVER PLATE ASSEMBLY, BATTERY, AND BATTERY ASSEMBLY METHOD**

(57)    Disclosed herein are cover assembly, battery, and battery assembly method, where the cover assembly includes a cover body and a spacer, the spacer is disposed on the cover body, and the spacer are configured to separate one or more tabs on a core from a case.

FIG. 5

EP 4 496 112 A1

**Description**

This application claims priority to Chinese Patent Applications No. 202310459818.9, No. 202320919016.7, No. 202320918966.8, filed on April 21, 2023, and Chinese Patent Application No. 202322683112.9, filed on September 28, 2023, the contents of all of which are incorporated herein by reference in their entirety.

TECHNICAL FIELD

The present application relates to batteries, and more particularly, to a cover assembly, a battery, and a battery assembly method.

BACKGROUND

The lithium battery has advantages of small volume, high energy density, long service life, environmental friendliness, and the like, and is widely applied to industries such as automobiles, electronic products, and energy storage systems. In recent years, battery corrosion leakage occurs frequently in batteries of various manufacturers due to internal insulation problems s caused by electrochemical corrosion, which is resulted from a short-circuit of the batteries where a conductive path between a negative electrode and an aluminum case is formed. As the structure of batteries is upgraded, a requirement for internal insulation of the battery is proposed in order to avoid a short circuit inside the battery.

In the related art, a battery is mainly insulated by attaching PET insulation tape to the tabs. When the battery works, the temperature in the battery is increased, especially at the tabs. Since the PET insulation tape are attached to the outer sides of the tabs, the PET insulation tape are easily detached from the tabs after shrinkage because of heat, which increases the risk of short circuit inside the battery.

SUMMARY OF THE INVENTION

The present application provides a cover assembly, a battery, and a battery assembly method to solve the above technical problems.

Embodiments of the present application provide a cover assembly, a battery, and a battery assembly method to solve a problem in the prior art that a battery insulation protection performance is insufficient.

In a first aspect, the present application provides a cover assembly comprising:

a cover body;
a spacer disposed on the cover body, the spacer being configured to separate one or more tabs on a core from a case.

In a second aspect, the present application provides a battery comprising a case, a core, and a cover assembly as described above, the core being provided in the case, the cover assembly being provided at an end of the case, the spacer in the cover assembly being configured to separate the one or more tabs on the core from the case.

In a third aspect, the present application provides a battery assembly method comprising:

assembling a cover assembly, wherein the cover assembly includes a cover body and a spacer capable of being fixed with respect to each other, the spacer protruding from the cover body along at least one side of the cover body to form one or more extending portions;
welding one or more tabs on a core to the cover assembly;
bending each extending portion of the spacer toward the core so that the extending portion contacts with a side surface of the core to shield at least one outer side of a corresponding one of the one or more tabs with the spacer;
assembling a case so that at least a part of the extending portion is located between the side surface of the core and an inner side wall of the case such that the tab is separated from the case.

BENEFICIAL EFFECT

Advantageous effects of the present application are:
the spacer provides insulation protection to the tabs, so that chemical corrosion caused by short-circuit contact of the tabs with the case can be effectively prevented. At the same time, the spacer is firmly fixed in the cover assembly. During use of the battery, the spacer does not come loose, thereby effectively avoiding short-circuit contact of the tabs with the case, thereby improving the safety performance of the battery, and solving the problem of insufficient insulation protection performance of the battery in the related art.

BRIEF DESCRIPTION OF THE DRAWINGS

FIG. 1 is a schematic cross-sectional view of the battery according to Embodiment 1 of the present application;
FIG. 2 is a schematic cross-sectional view of the core not connected to the cover assembly yet according to Embodiment 1 of the present application;
FIG. 3 is a schematic structural view of the core connected to the cover assembly according to Embodiment 1 of the present application;
FIG. 4 is a schematic structural view showing hot-melt connection of the lower plastic part and the half-type insulating adhesive tape according to Embodiment 1 of the present application;

FIG. 5 is a schematic view showing a structure of hot-melt connection of the lower plastic part and the full-type insulating adhesive tape according to Embodiment 1 of the present application;

FIG. 6 is a schematic structural view showing the main body portion and the protective portion which have not been snap fit according to Embodiment 1 of the present application;

FIG. 7 is a schematic structural view showing the main body portion and the protective portion which have been snap fit according to Embodiment 1 of the present application;

FIG. 8 is a schematic structural view showing the insulating adhesive tape fixed to the cover body by the connecting piece in the cover assembly according to Embodiment 1 of the present application;

FIG. 9 is a schematic structural view of the insulating adhesive tape shown in FIG. 8;

FIG. 10 is a schematic cross-sectional view of the end of the protective portion of the battery abutting against an upper surface of the core according to Embodiment 2 of the present application;

FIG. 11 is a schematic cross-sectional view of a part of a protective portion of the battery interposed between the core and the case according to Embodiment 2 of the present application;

FIG. 12 is a schematic structural view of the battery with the case removed according to Embodiment 2 of the present application;

FIG. 13 is a schematic view showing a first structure of the insulator according to Embodiment 2 of the present application;

FIG. 14 is a schematic view showing a second structure of the insulator according to Embodiment 2 of the present application;

FIG. 15 is a schematic cross-sectional view of the insulator according to Embodiment 2 of the present application;

FIG. 16 is an exploded schematic view of the battery according to Embodiment 3 of the present application;

FIG. 17 is a partial schematic structure view of the battery according to Embodiment 3 of the present application;

FIG. 18 is a partial structural schematic view of the battery from another viewing angle according to Embodiment 3 of the present application;

FIG. 19 is a partial exploded schematic view of the battery according to Embodiment 3 of the present application;

FIG. 20 is a partial exploded schematic view of the battery from another viewing angle according to Embodiment 3 of the present application;

FIG. 21 is a perspective view of the top cover according to Embodiment 3 of the present application.

Reference signs illustrate:

1. case; 2. core; 21. tab; 3. cover assembly; 31. cover body; 311. lower plastic part; 3111. block fastener; 3112. through hole; 312. top cover; 313. upper plastic part; 314. baffle; 3141. hook fastener; 32. terminal; 33. insulating adhesive tape; 331. connecting portion; 332. extending portion; 333. bending line; 334. clearance hole; 34. connecting piece; 341. convex portion; 35. explosion-proof valve; 36. hot melt site; 3114. convex portion; 3113. liquid injection hole; 30. insulator; 3110. main body portion; 3101. first surface; 3102. second surface; 3120. protective portion; 3131. pressing-holding portion; 316. case body portion; 318. first space; 340. bus bar; 10. case structure; 1A. cavity; 301. first insulating film; 3011. first covering portion; 3012. second covering portion; 4. second insulating film; 5. first side; 6. second side; 320. second sub-covering portion; 15. groove.

DETAILED DESCRIPTION OF THE EMBODIMENTS

The technical solution of the present application will be further explained by the detailed description. It will be appreciated by those skilled in the art that the examples are merely illustrative of the present application and should not be construed as particularly limiting the present application.

The present application discloses the cover assembly 3 and the battery to which the cover assembly 3 is applied, so as to solve the problem of insufficient insulation protection performance of the battery in the prior art.

In the present embodiment, the battery includes the core 2, the case 1, and the cover assembly 3, wherein the core 2 is disposed in the case 1, the cover assembly 3 is disposed at an end of the case 1, the cover assembly 3 is fixedly connected to the case 1 to encapsulate the core 2. Tabs 21 are disposed on the core 2, the tabs 21 are configured to be welded with the cover assembly 3.

The cover assembly 3 includes the cover body 31 and a spacer, whose main function is insulation protection, so that the tabs 21 on the core 2 are spaced from the case 1. That is, the spacer is used for insulation protection of the tabs 21, so that chemical corrosion caused by short-circuit contact between one or more of the tabs 21 and the case 1 can be effectively prevented. Besides, the spacer is firmly fixed in the cover assembly 3, and will not come loose during the use of the battery, so that short-circuit contact between the tabs 21 and the case 1 can be effectively avoided, thereby improving the safety performance of the battery, thereby solving the problem of insufficient insulation protection performance of the battery in the related art.

Embodiment 1

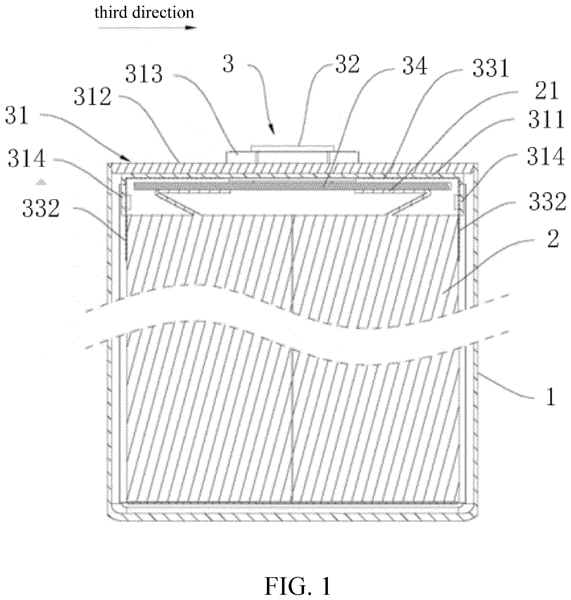

Referring to FIGS. 1 to 3, the cover assembly 3 includes the cover body 31, the terminals 32, the spacer, the connecting pieces 34, and the explosion-proof valve 35, where the terminals 32, the spacer, and the explosion-proof valve 35 are provided on the cover body 31. The connecting pieces 34 are each welded and fastened to the corresponding tabs 21 and the corresponding terminal 32, respectively, preferably welded and fastened by laser to achieve an electrically conductive connection of the tabs 21 to the terminal 32.

The spacer has a main function of insulation protection, and the spacer can be attached to at least one side surface of the core 2 so that the tabs 21 on the core 2 are spaced from the case 1.

Thus, by providing the spacer on the cover body 31, when the cover assembly 3 is applied to the battery, the spacer can be attached to at least one side surface of the core 2, so that the spacer can be used to provide insulation protection to the tabs 21, thereby effectively preventing chemical corrosion caused by short circuit between the tabs 21 and the case 1, improving the safety performance of the battery, and solving the problem of insufficient insulation protection performance of the battery in the related art.

In some cases, when the spacer is affected by the electrolyte or are not adhesive after being heated, the spacer, which can still be attached to the side surface of the core 2 subjected to the clamping force between the core 2 and the case 1, is not easy to expose the tabs 21 due to malfunction of the adhesive, thereby ensuring insulation between the tabs 21 and the case 1.

Specifically, in the present embodiment, the cover body 31 includes the lower plastic part 311, the top cover 312, and the upper plastic part 313, where the top cover 312 is configured to be fixedly connected to the case 1, and the upper plastic part 313 and the lower plastic part 311 are disposed on two opposite sides of the top cover 312, respectively. Specifically, the upper plastic part 313 is disposed on one side of the top cover 312 facing away from the core 2, the lower plastic part 311 is disposed on one side of the top cover 312 facing toward the core 2, the spacer is disposed on one side of the lower plastic part 311 facing toward the core 2, the explosion-proof valve 35 is disposed on the top cover 312, and the terminal 32 can be disposed to pass through the upper plastic part 313, the top cover 312, and the lower plastic part 311.

The spacer is provided on the lower plastic part 311, which has the advantage that the assembly of the spacer can be facilitated.

Of course, the terminal 32 may also be disposed to pass through the upper plastic part 313 and the top cover 312, and the connecting piece 34 may be disposed to pass through the lower plastic part 311, and then the terminal 32 is welded to the connecting piece 34. For this reason, the lower plastic part 311 needs to be provided with the through holes 3112 to be passed through by the connecting pieces 34.

It should also be noted that the upper plastic part 313 and the lower plastic part 311 may be integrally formed or separated. The cover body 31 may also not include the above-mentioned upper plastic part 313, and the terminal 32 and the top cover 312 are insulated by a sealing ring.

It should also be noted that, in some other embodiments, there may also be no connecting piece 34, i.e., the tabs 21 may be welded directly to the terminal 32. In this case, the lower plastic part 311 also needs to be provided with through holes 3112 for the terminals 32 to pass through. Of course, it is preferable to connect the tabs 21 and the terminal 32 by the connecting piece 34, and at this time, it is preferable that the connecting piece 34 and the case 1 are separated by the spacer.

Preferably, the spacer includes the insulating adhesive tape 33, and two opposite sides of the insulating adhesive tape 33 can be bent toward the core 2 in the width direction of the lower plastic part 311 and attached to the opposite sides of the core 2. Preferably, the insulating adhesive tape is made of PP material.

The inventive concept of the present embodiment mainly relates to the insulating adhesive tape 33 in the cover assembly 3. Therefore, the specific number, type and structure of any other component in the cover assembly 3 may not be limited in the present application.

For ease of understanding, the width direction of the lower plastic part 311 is defined as the third direction, and the length direction of the lower plastic part 311 is defined as the second direction. Preferably, the spacer includes the insulating adhesive tape 33, two opposite sides of which can be bent toward the core 2 in the third direction (i.e., in the width direction of the lower plastic part 311) and attached to the two opposite sides of the core 2, so as to wrap the tabs 21 and the connecting pieces 34 in the third direction by the insulating adhesive tape 33, thereby insulating the tabs 21 and the connecting pieces 34 from the case 1, respectively.

According to the combination of the above embodiments, the insulating adhesive tape 33 is fixed to and with respect to the lower plastic part 311, and two opposite sides of the insulating adhesive tape 33 are bent toward the core 2 and are attached to two opposite sides of the core 2 (that is, on two major sides of the core 2) to wrap the tabs 21 and the connecting pieces 34 in the width direction (that is, in the third direction), so that the tabs 21 and the connecting pieces 34 are insulated by the insulating adhesive tape 33, thereby effectively preventing chemical corrosion caused by the short circuit resulted from the tabs 21 and the connecting pieces 34 contacting the case 1, thereby further improving the overall insulating effect.

In the present embodiment, it is preferable that the insulating adhesive tape 33 is made of PP material, and the insulating adhesive tape 33 of PP material has good safety and heat resistance, and is not easy to have insufficient adhesion due to the encounter of electrolyte or heat, so that the connecting stability of the insulating adhesive tape 33 is improved, and the insulating adhesive tape 33 is avoided from detachment from the core 2.

In the present embodiment, it is preferable that the insulating adhesive tape 33 is attached to one side of the lower plastic part 311 facing the core 2 (hereinafter referred to as the lower surface of the lower plastic part 311) so as to facilitate bending of the insulating adhesive tape 33 toward the core 2. It will be appreciated that, in order to avoid the insulating adhesive tape 33 from interfering with the connection between the terminals 32 and the connecting pieces 34 and from the normal operation of the explosion-proof valve 35, the insulating adhesive tape 33 needs to be provided with the corresponding clearance holes, clearance grooves, or the like, or to form clearances by dimensioning the insulating adhesive tape 33 at corresponding positions thereof.

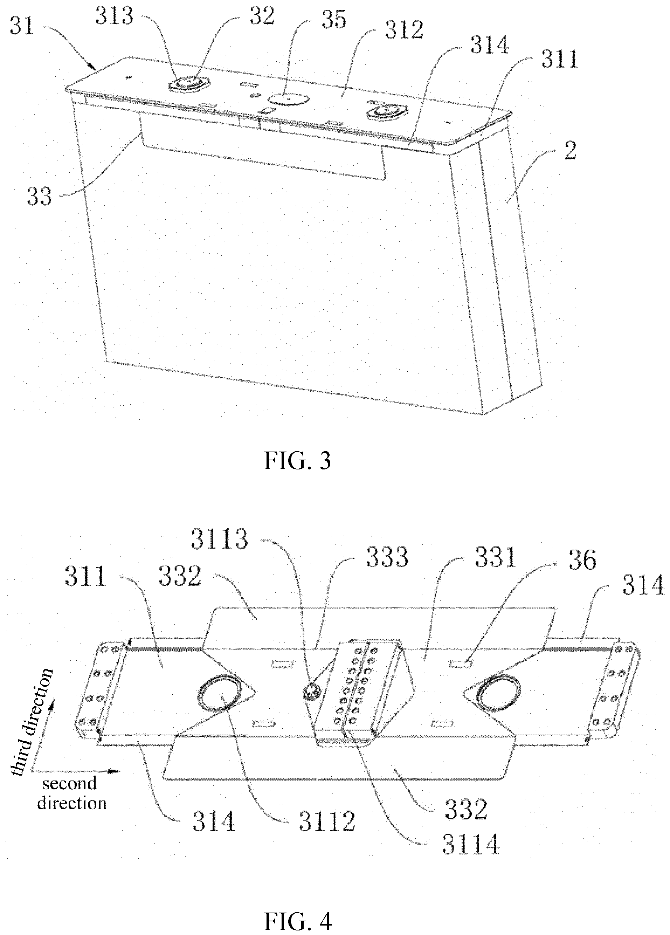

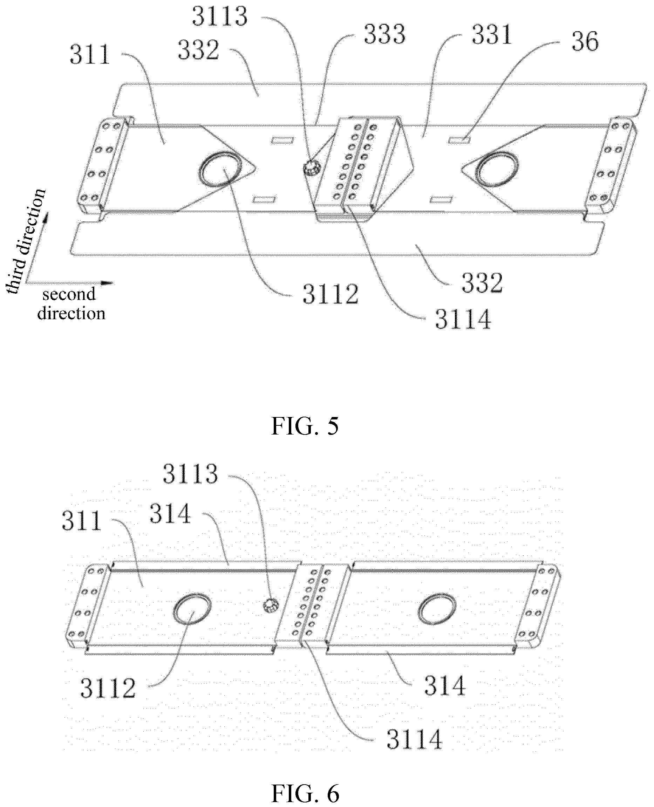

Referring to FIG. 4 and FIG. 5, in the present embodiment, the insulating adhesive tape 33 include the connecting portion 331 which is attached to one side of the lower plastic part 311 (i.e., the lower surface of the lower plastic part 311), and two extending portions 332 which are respectively connected to two opposite sides of the connecting portion 331 in the third direction, and the two extending portions 332 are folded to be attached to two opposite sides of the core 2 (i.e., two major sides of the core 2). Preferably, the extending portions 332 are provided with the fixing adhesive configured to adhere to the core 2. Specifically, the fixing adhesive may be the adhesive layer applied to the extending portions 332, or may be the adhesive material pressed onto the extending portions 332, or may be the double-sided adhesive tape applied to the extending portions 332. In this manner, the extending portions 332 are secured onto the sides of the core 2 by the adhesive.

As the specific application example, there are two types of insulating adhesive tape 33 used in the present application: the half type (as shown in FIG. 4) and the full type (as shown in FIG. 5). The half-type insulating adhesive tape 33 has a length of the extending portions 332 shorter than a length of the lower plastic part 311 in the second direction. The full-type insulating adhesive tape 33 has a length of the extending portions 332 adapted to the length of the lower plastic part 311 in the second direction.

The half-type or full-type insulating adhesive tape 33 are both at least required to be able to completely wrap the tabs 21. It is also possible for the extending portions 332 to partially wrap the connecting pieces 34, since the connecting pieces 34 can be fixed relatively stably with respect to the terminals 32. Of course, it is preferable that the extending portions 332 completely wraps the connecting pieces 34. More preferably, in the specific application, the full-type insulating adhesive tape 33 is used, and the insulating protective effect thereof is more effective.

In order to facilitate the bending of the extending portions 332, it is preferable that the bending lines 333 are pre-provided between the connecting portion 331 and the extending portions 332, and the bending lines 333 may be formed by an indentation, or may be formed by bending the insulating adhesive tape 33 in advance by tools before the insulating adhesive tape 33 is assembled.

Specifically, the bending lines 333 extend in the second direction.

Preferably, the extending portions 332 have a contact depth with the core 2 of 20 mm or more.

Note that, depending on the bending direction of the tabs 21 on the core 2, there may be only one extending portion 332, that is, the extending portion 332 is attached to only one of the major sides of the core 2. According to the arrangement of the plurality of tabs 21, a plurality of the extending portions 332 may be provided on the same side, with different extending portions 332 isolation different tabs correspondingly. Therefore, the number of the extending portions 332 may not be limited in the present application.

Of course, in other preferred embodiments, the spacer may be made of other materials, or the spacer may be made in other structures as long as the spacer can be fixed to and with respect to the cover body 31, and can be attached to the side surface of the core 2 so as to achieve the function of isolating the tabs 21 and the case 1. For example, a plastic sheet or the like in the shape of n is used as the spacer.

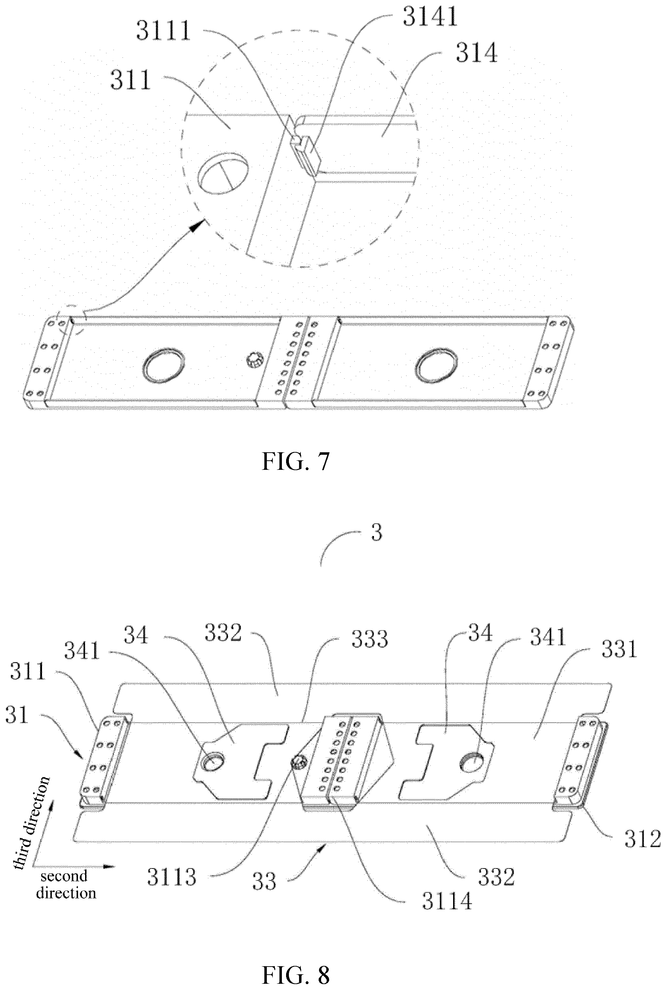

Referring to FIGS. 6 and 7, in the present embodiment, it is preferable that the baffles 314 may be provided on the lower plastic part 311. Specifically, four baffles 314 arranged in pairs on two opposite sides in the width direction of the lower plastic part 311 may be provided, that is, two baffles 314 are provided on each of the two opposite sides of the lower plastic part 311 in the third direction. The reason to provide two baffles 314 on each side of the lower plastic part 311 is that, the middle part of the lower plastic part 311 is provided with a convex portion 3114 corresponding to the explosion-proof valve. The convex portion 3114 separate the positive terminal and negative terminal. Based on the obstruction of the convex portion 3114, two baffles 314 need to be set on each side of the lower plastic part 311. It should be noted that when there is no such convex portion 3114 in the lower plastic part 311 or when the size of the convex portion 3114 is reduced in the third direction, only one baffle 314 may be provided on each side of the lower plastic part 311, which may also satisfy the function and effect thereof.

Further, the lower plastic part 311 is provided with an injection hole 3113, which is located at one side of the convex portion 3114. More specifically, the injection hole 3113 is located between the convex portion 3114 and one of the through holes 3112.

Therefore, the number of the baffles 314 on each side may not be limited in the present application.

It should also be noted that, depending on the bending direction of the tabs 21 on the core 2, the baffles 314 may be provided on only one side of the lower plastic part 311 based on the same principle that there may be only one extending portion 332.

On the basis of the above-mentioned solution, the two opposite baffles 314 shield at two opposite sides of the tabs 21 and the connecting piece 34, so that the tabs 21 and the connecting piece 34 are shielded in the third direction by the baffles 314.

In the above-mentioned solution, the dual protections of the insulating adhesive tape 33 and of the baffle 314 are combined, so that the contact of the tabs 21 and the connecting pieces 34 with the case 1 is better prevented, and the influence of the failure of the insulating adhesive tape 33 on the insulation protection performance can be avoided.

Preferably, the baffles 314 are rotatable with respect to the lower plastic part 311 toward or away from the core 2, i.e., the axis of rotation of the baffles 314 are parallel to the second direction, and the baffles 314, which has been rotated toward the core 2, can abut against the outside of the extending portions 332.

More preferably, the lower plastic part 311 is integrally formed with the baffles 314, and the connections of the baffles 314 and the lower plastic part 311 are provided with the weak region and/or discontinuous apertures so that the baffles 314 can each be rotated and bent toward the core 2 around the connection of the baffle 314 and the lower plastic part 311. The integrated lower plastic part 311 and baffles 314 are less expensive relative to those using rotating shafts, and the baffles 314 can be kept in the flat position prior to assembly, so that welding of the terminals 32 and the connecting pieces 34 is convenient and an operation space is provided for adjusting the relative positions of the tabs 21.

The weak region refers to the region where the connection between the baffles 314 and the lower plastic part 311 is weakened, such as by a V groove or a U groove, so that when one of the baffles 314 is bent, the weak region is preferentially forced to deform. The discontinuous apertures also work based on the same principle.

Referring to FIG. 7, in order to avoid the baffles 314 from loosening or reverting after the rotation and bending, the bent baffles 314 are snap fit to the lower plastic part 311. Specifically, the baffles 314 are each provided with the hook fastener 3141, and the lower plastic part 311 is provided with the block fastener 3111, and the hook fastener 3141 is engaged with the block fastener 3111 so that the baffle 314 is fixed to and with respect to the lower plastic part 311. Of course, the hook fastener 3141 and the block fastener 3141 are interchangeable, for example, the hook fastener 3141 may be provided on the lower plastic part 311, and the block fastener 3141 may be provided on the baffle 314.

As described above, since the baffles 314 can shield at the outside of the extending portion 332 of the insulating adhesive tape 33, and the baffles 314 can also be fixed with respect to the lower plastic part 311, the baffles 314 can also serve to reduce or avoid the outward curvature of the extending portion 332 due to its insufficient bent during the assembling process (in particular, the suspended portion of the extending portion 332 between the lower plastic part 311 and the core 2), and can also drive the extending portion 332 to bent through the baffles 314 during the assembling process, and limit the bent extending portion 332, thereby improving the assembling efficiency and flatness.

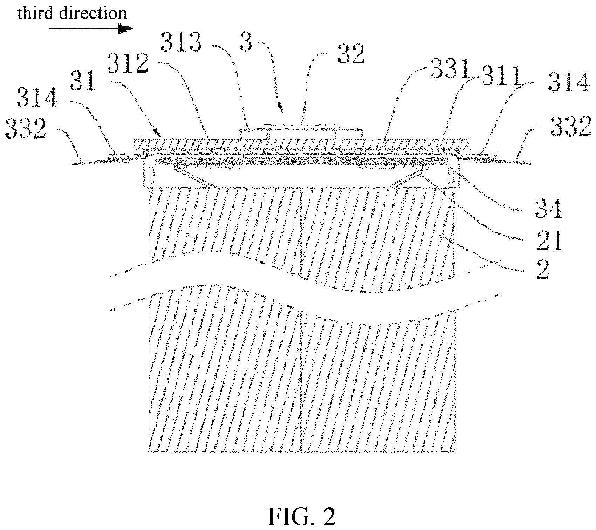

Referring to FIGS. 1 and 2, in the present embodiment, it is preferable that there are two possible states of the baffle 314 after the rotation and bending. One is that a portion of the baffle 314 is attached to one side of the core 2 in the third direction. In this case, the insulation protection effect of the baffle 314 is best. In order to avoid that the gap between the core 2 and the case 1 is excessively large due to the baffle 314, the end of the baffle 314 may be gradually thinned, or the length of the baffle 314 inserting between the core 2 and the case 1 is within 5 mm to allow the baffle 314 to be accommodated by deformation of the core 2. Another is that a gap is provided between the end of the baffle 314 and the side surface of the core 2 facing the lower plastic part 311 for the insulating adhesive tape 33 to pass through.

In order to realize the fixing of the insulating adhesive tape 33 on and with respect to the lower plastic part 311, in the present embodiment, two schemes are proposed as follows:

Fixing scheme (1): Referring to FIGS. 4 and 5, the insulating adhesive tape 33 are hot-melted to the lower plastic part 311. As an example, four hot-melt sites 36 are formed on the insulating adhesive tape 33, and the hot-melt sites 36 are arranged symmetrically with respect to the central axis of the insulating adhesive tape 33 so that the insulating adhesive tape 33 are uniformly stressed and connected stably, and the process is relatively simple. Preferably, two of the hot-melt sites 36 correspond to one side of the positive terminal and another two of the hot-melt sites 36 correspond to one side of the negative terminal, and the hot-melt sites 36 are capable of fusing and fixing the insulating adhesive tape 33 with the lower plastic part 311 with respect to each other. It is further preferred that the hot-melt sites 36 on each side are located between the through hole 3112 and the convex portion 3114, and it is to be understood that the hot-melt sites 36 on each side are located between the terminal 32 and the explosion-proof valve 35. The hot-melt sites 36 may each be formed by the following steps: automatically centering the insulating adhesive tape 33 by the hot melt apparatus, heating the insulating adhesive tape 33 by a heat source (such as a laser or a heating rod), and melting the heated region on the insulating adhesive tape 33 to form the above-mentioned hot-melt site 36 so as to fuse and fix the insulating adhesive tape 33 with the lower plastic part 311 at the hot-melt site 36; or by the following alternative steps: selecting a spot in advance on the insulating adhesive tape 33, which spot for example may be formed by sanding the surface portion of the insulating adhesive tape 33, and then aligning and heating the spot by a heat source (such as a laser, a heating rod, or the like) to melt it to form the above-mentioned hot-melt site 36 so as to fuse and fix the insulating adhesive tape 33 on and with respect to the lower plastic part 311 at the hot-melt site 36. In this way, the insulating adhesive tape 33 is attached to the side of the lower plastic part 311 facing the core 2 by hot melting. Of course, the number of hot-melt sites 36 may be set as desired, such as five, six, eight, etc. The hot-melt sites 36 may allow multi-point hot-melt bonding or face hot-melt bonding. In addition, in other preferred embodiments, the number of hot-melt sites 36 may be two or three, and an asymmetric arrangement may be used.

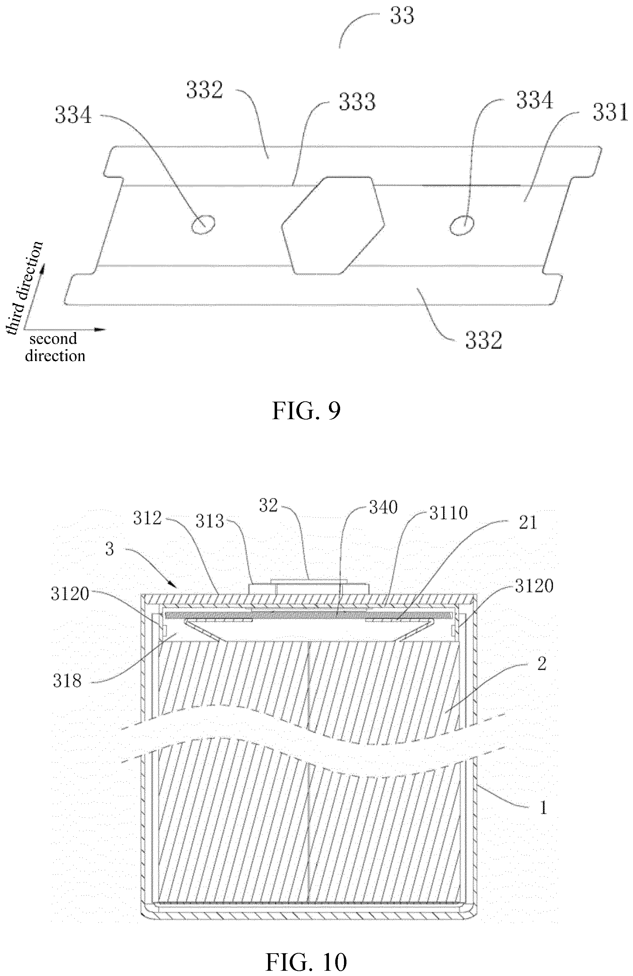

Fixing scheme (2): Referring to FIGS. 8 and 9, each of the connecting pieces 34 is attached to the lower plastic part 311, and the connecting piece 34 clamps and fixes the insulating adhesive tape 33 to the lower plastic part 311. As an example, the lower plastic part 311 is provided with the through holes 3112, and the insulating adhesive tape 33 is provided with the clearance holes 334 corresponding to the through holes 3112. The convex portion 341 of each of the connecting pieces 34, which is arranged to be welded and fixed to the terminal 32, penetrates the through hole 3112 and the clearance hole 334. The flat plate part of each of the connecting piece 34, which is arranged to be welded and fixed to the tabs 21, is clamped on the side of the insulating adhesive tape 33 facing away from the lower plastic part 311, so that the insulating adhesive tape 33 is clamped and fixed to the lower plastic part 311 by the connecting pieces 34.

It should be noted that the fixing scheme (1) and the fixing scheme (2) may be used alone or in combination.

Embodiment 2

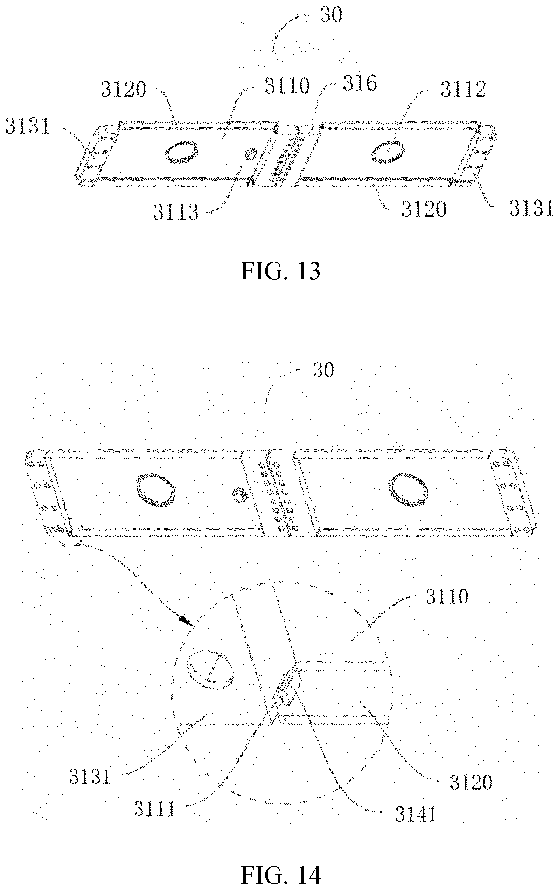

Referring to FIGS. 13 to 15, the spacer includes an insulator 30 capable of providing an effective insulating protection to improve the safety of the battery and reduce the production cost of the battery.

Referring to FIGS. 10 to 12, based on the insulator 30 provided herein, the present application also discloses the cover assembly 3 to which the insulator 30 is applied, and the battery to which the cover assembly 3 is applied. Thus, the tabs 21 are insulated and protected by the insulator 30.

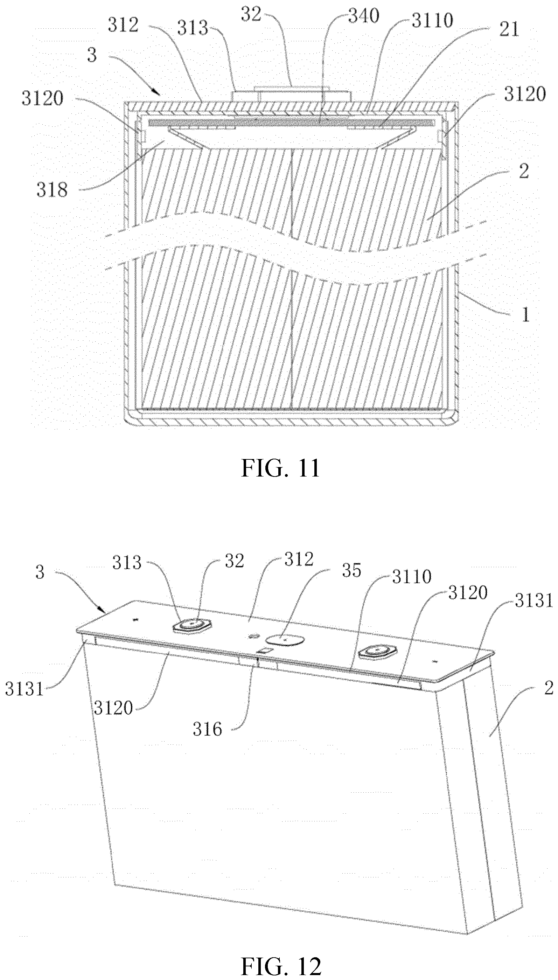

Referring to FIGS. 10 and 11, in the present embodiment, the battery includes the case 1, the core 2, and the cover assembly 3, where the core 2 is disposed in the case 1, the cover assembly 3 is disposed at an end of the case 1, and after the cover assembly 3 is fixedly connected to the case 1, the core 2 can be packaged. The tabs 21 are provided on the core 2, and the tabs 21 are configured to be in conductive connection with the cover assembly 3.

Referring to FIG. 13, in the present embodiment, the spacer includes the insulator 30, the cover assembly 3 includes the top cover 312, the terminals 32, the bus bars 340, the explosion-proof valve 35, and the upper plastic part 313, where the top cover 312 is configured to be fixedly connected to the case 1, and the upper plastic part 313 and the insulator 30 are disposed on two sides of the top cover 312, respectively. Specifically, the upper plastic part 313 is disposed on one side of the top cover 312 facing away from the core 2, the insulator 30 is disposed on one side of the top cover 312 facing toward the core 2, and the terminals 32 and the explosion-proof valve 35 are all disposed on the top cover 312. Specifically, the terminals 32 may be disposed to pass through the upper plastic part 313, the top cover 312, and the insulator 30, and the terminals 32 are further laser-welded to the bus bars 340 to realize conductive connection therewith, and the bus bars 340 is configured to be laser-welded to the tabs 21 to realize conductive connection therewith.

Of course, the terminal 32 may also be disposed to pass through the upper plastic part 313 and the top cover 312, and the bus bar 340 may be disposed to pass through the insulator 30, and then the terminal 32 is welded to the bus bar 340.

It should also be noted that the bus bar 340 may be formed as an integral part with the terminal 32, so that the tabs 21 can be electrically conductive and output electricity. The cover assembly 3 may also not include the above-mentioned upper plastic part 313, but the terminal 32 and the top cover 312 may be insulated by a seal ring. The inventive concept of the present embodiment mainly relates to the insulator 30 in the cover assembly 3. Therefore, the specific number, type and structure of any one other component in the cover assembly 3 are not limited in the present application.

The insulator 30 includes the main body portion 3110, the protective portions 3120, the pressing-holding portions 3131, and the case body portion 316.

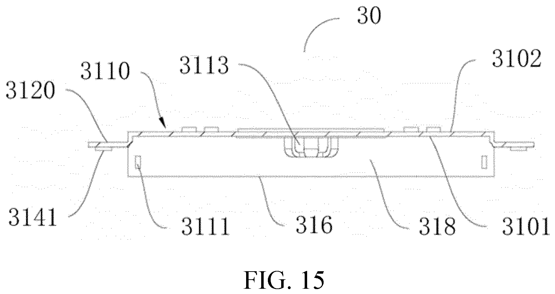

Referring to FIGS. 10 and 15, it is important that the main body portion 3110 has the first surface 3101 configured to face the core 2, the protective portions 3120 are each connected to at least one side in the width direction (i.e., the third direction) of the main body portion 3110, the first spaces 318 each configured to accommodate the tabs 21 on the core 2 is formed between the protective portions 3120 and the first surface 3101, and the protective portions 3120 can each be interposed between an inner side wall of the case 1 and the tabs 21 so that the case 1 and the tabs 21 are separated.

Of course, the main body portion 3110 also has the second surface 3102, the first surface 3101 and the second surface 3102 are facing away from each other, and when installed, the second surface 3102 may contact with the surface of the top cover 312, that is, the first surface may also be considered to be the side of the main body portion 3110 configured to face away from the top cover 312.

According to the above solution, in the insulator 30, the protective portions 3120 are provided on the main body portion 3110 so as to provide an insulating protection, so that when it is applied to the battery, the tabs 21 are shielded by the protective portions 3120 in the insulator 30, so as to shield between the tabs 21 and the case 1 in the width direction (i.e., the third direction) of the main body portion 3110, thereby effectively preventing chemical corrosion caused by short-circuit contact between the tabs 21 and the case 1. Under the premise of controlling the overall number of battery components and the overall size of the battery, the safety performance of the battery has been improved and the problem of insufficient insulating protection performance in the related art has been solved.

The case body portion 316 is provided in the middle of the main body portion 3110, and the case body portion 316 corresponds to the explosion-proof valve 35. Therefore, the plurality of holes may be provided in the case body portion 316 to facilitate discharge of the electrolyte.

There are two pressing-holding portions 3131 provided at two ends in the longitudinal direction of the main body portion 3110 respectively, and the pressing-holding portions 3131 are configured to abut against the core 2. The case body portion 316 and the two pressing-holding portions 3131 are located on one side of the main body portion 3110 facing toward the core 2, that is, both the case body portion 316 and the two pressing-holding portions 3131 protrude from the first surface 3101, and the case body portion 316 and the two pressing-holding portions 3131 are equal height, so that the case body portion 316 can also abut against the core 2, so that the core 2 can be better fixed in the thickness direction (that is, the first direction) of the insulator 30, so that the core 2 cannot move in the thickness direction of the insulator 30 in the case 1.

In addition, the case body portion 316 functions to separate the positive terminal and negative terminal.

Referring to FIG. 13, in order to achieve welding connection between the terminals 32 and the bus bars 340, the body portion 3110 of the insulator 30 may also be provided with the through holes 3112 through which the terminals 32 may pass, or the convex portions of the bus bars 340 may pass.

Based on the position obstruction of the case body portion 316, and the positive and negative terminals and the positive and negative tabs, in the present embodiment, four protective portions 3120 may be provided in two pairs. The two pairs of protective portions 3120 are respectively connected to two opposite sides in the width direction (i.e., the third direction) of the main body portion 3110, that is, each side in the width direction (i.e., the third direction) of the main body portion 3110 is provided with two protective portions 3120. I two protective portions 3120 on the same side are located on two sides of the case body portion 316, so that the protective portions 3120 are arranged around the periphery of the cavity.

It will be appreciated that when there is no case body portion 316 or the case body portion 316 is reduced in size in the width direction (i.e., the third direction) of the main body portion 3110, only one protective portion 3120 may be provided on each side of the main body portion 3110, and the function and effect thereof can also be satisfied, that is, two protective portions 3120 are provided respectively at two opposite sides to be connected to the main body portion 3110 in the width direction.

Further, the insulator 30 is provided with the liquid injection hole 3113 which is located at one side of the case body portion 316. More specifically, the liquid injection hole 3113 is located between the case body portion 316 and one of the through holes 3112.

Therefore, the number of the protective portions 3120 on each side is not limited in the present application.

In the case where the main body portion 3110, the protective portions 3120, the pressing-holding portions 3131, and the case body portion 316 are combined, the main body portion 3110 may serve as the bottom wall of each of the first spaces 318, and the protective portions 3120, the pressure-holding portions 3131, and the case body portion 316 may serve as side walls of each of the first spaces 318. Two first spaces 318 may correspond to the positive and negative terminals and the positive and negative tabs.

Preferably, the protective portions 3120 can be rotated toward or away from the core 2 with respect to the main body portion 3110, that is, the axis of rotation of each of the protective portions 3120 is parallel to the longitudinal direction of the main body portion 3110, and the protective portion 3120, which is rotated toward the core 2, can shield at the outer side of the tabs 21.

More preferably, referring to FIG. 15, the main body portion 3110 is integrally formed with the protective portion 3120, and the protective portions 3120 are each rotatably bent toward the core 2 around its connection with the main body portion 3110, so as to cover two opposite sides of the tabs 21.

Specifically, the weak region and/or the discontinuous apertures are provided at the connection of each of the protective portions 3120 and the main body portion 3110 so that when the protective portion 3120 is bent, the connection of the protective portion 3120 is preferentially forced to deformed. Preferably, the extending direction of the weak region and/or the discontinuous apertures is parallel to the longitudinal direction (i.e., the second direction) of the main body portion 3110.

The integrated main body portion 3110 and the protective portions 3120 are less expensive relative to those using rotating shafts, and the protective portion 3120 can be kept in the flat state before assembly, so that welding of the terminals 32 and the bus bars 340 is convenient, and an operation space is provided for adjusting the relative positions of the tabs 21.

The weak region refers to the region in which the connection between the protective portions 3120 and the main body portion 3110 is weakened, for example, by opening the V groove or the U groove, so that when one the protective portions 3120 is bent, the weak region is preferentially forced to deform. The discontinuous apertures also work based on the same principle.

Referring to FIG. 14, in order to avoid the protective portions 3120 from loosening or reverting after the rotation and bending, the bent protective portions 3120 are snap fit to the pressing-holding portions 3131. Specifically, as an example, the protective portions 3120 are each provided with the hook fastener 3141, and the pressing-holding portion 3131 is provided with the block fastener 3111. The hook fastener 3141 is engaged with the block fastener 3111 so that the protective portion 3120 and the pressing-holding portion 3131 are fixed with respect to each other. Of course, as another example, the hook fastener 3141 and the block fastener 3111 may be interchangeable, for example, the hook fastener 3141 may be provided on the pressing-holding portion 3131, and the block fastener 3111 may be provided on the protective portion 3120.

Based on the presence of the case body portion 316 and the four protective portions 3120 provided in two pairs, the case body portion 316 may also be provided with the block fasteners 3141, and the block fasteners 3141 on the case body portion 316 may each be engaged with the hook fastener 3141 on the protective portion 3120.

Referring to FIG. 10 and FIG. 11, in the present embodiment, it is preferable that there are two possible states of the protective portion 3120 after being rotated and bent, one is that the end of the protective portion 3120 abuts against the side surface of the core 2 facing the insulator 30, so that the core 2 can be better fixed while the insulating protection effect is provided; another is that a part of the protective portion 3120 contacts with one side of the core 2 in the width direction (i.e., the third direction) of the main body portion 3110, and in this case the insulating protective effect of the protective portion 3120 is best. In order to avoid that the gap between the core 2 and the case 1 is excessively large due to the protective portion 3120, the end of the protective portion 3120 may be gradually thinned, or the length of the protective portion 3120 inserting between the core 2 and the case 1 is controlled within 5 mm to allow the protective portion 3120 to be accommodated by deformation of the core 2.

In view of the above, the insulator 30 provided in the present application has good insulation protection effect and high overall performance. In the insulator 30, the protective portions 3120 are provided on the main body portion 3110 so as to provide an insulation protection, so that when applied to the battery, the tabs 21 are shielded by the protective portions 3120 in the insulator 30, thereby achieving insulation between the tabs 21 and the case 1, preventing chemical corrosion caused by short-circuit, eliminating the need to increase the overall number of components of the battery, and eliminating the need to increase the overall size of the battery. The assembly of the battery is convenient in that the protective portions 3120 can be bent relative to the main body portion 3110, and the protective portions 3120 can be kept in the flat state before assembly and shield the tabs 21 after bending, so as to facilitate performing connection of other components of the cover assembly 3 (in particular, to facilitate welding the terminals 32 and the bus bars 340), and to provide an operation space for adjusting the relative positions of the tabs 21.

Embodiment 3

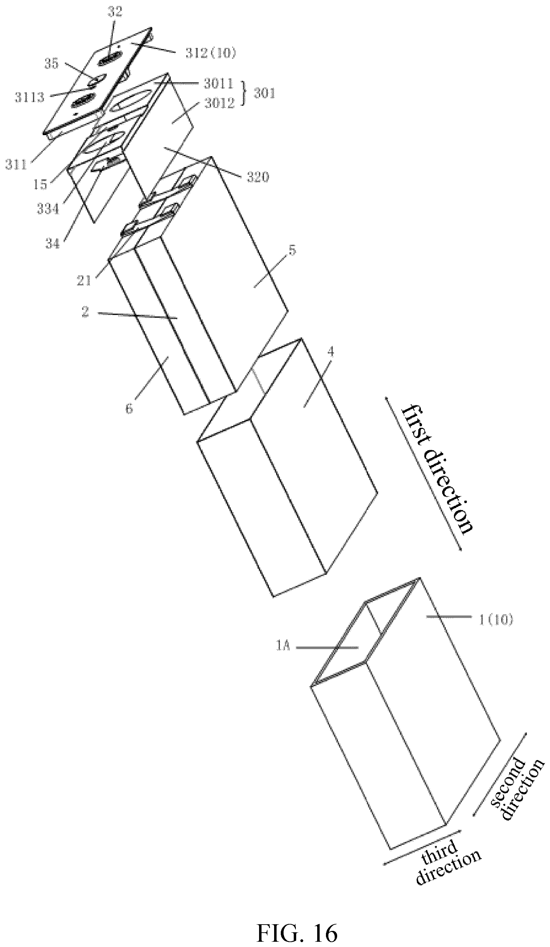

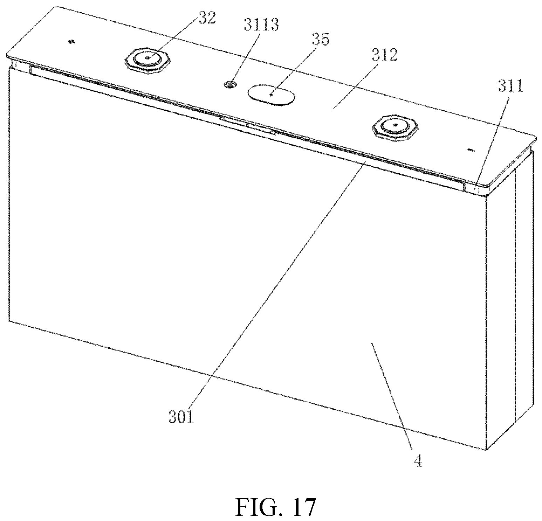

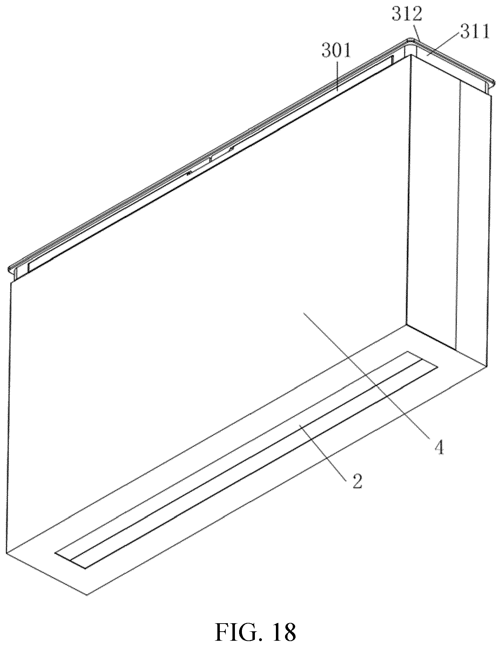

Referring to FIGS. 16 to 18, the spacer includes the first insulating film 301 capable of providing an effective insulating protection to improve the safety of the battery and reduce the production cost of the battery.

Referring to FIGS. 16 to 18, the battery includes the case structure 10 in which the cavity 1A is formed, the core 2, and the second insulating film 4. The core 2 is located in the cavity 1A, and the tabs 21 are provided on the core 2. The first insulating film 301 is located between the core 2 and the wall of the cavity 1A. The first insulating film 301 includes the first covering portion 3011 and the second covering portion 3012 connected to each other, the first covering portion 3011 covering the tabs 21, and the second covering portion 3012 covering at least the part of the core 2. The second insulating film 4 wraps on the outer surface of the core 2. The second covering portion 3012 is located between the core 2 and the second insulating film 4.

In the embodiment of the present application, the tabs 21 are covered by the first covering portion 3011 on the first insulating film 301, and the core 2 is covered by the second covering portion 3012 on the first insulating film 301, so that the first insulating film 301 can completely cover the periphery of the tabs 21, the second insulating film 4 covers the outer surface of the core 2 while covering the second covering portion 3012 on the first insulating film 301, so that the first insulating film 301 is immersed in the electrolyte all the time without the risk of falling off, that is, the first insulating film 301 keeps completely covering the periphery of the tabs 21 during long-term use, thereby avoiding the short-circuit problem caused by the contact of the tabs 21 with the case structure 10 in the battery.

It will be appreciated that the second insulating film 4 wraps the core 2, so that the insulating arrangement between the core 2 and the case structure 10 can be realized. On this basis, the second insulating film 4 can further wrap the second covering portion 3012, so that the first insulating film 301 and the core 2 are fixed with respect to each other, so that the functions of the second insulating film 4 are diversified.

In one embodiment, the second insulating film 4 may completely wrap the second covering portion 3012. In another embodiment, the second insulating film 4 may cover at least part of the second covering portion 3012. In order to improve the fixing effect of the second insulating film 4 on the first insulating film 301, in the specific embodiment of the present application, the second insulating film 4 completely wraps the second covering portion 3012.

Specifically, in one embodiment of the present application, the second insulating film 4 is the PET blue tape.

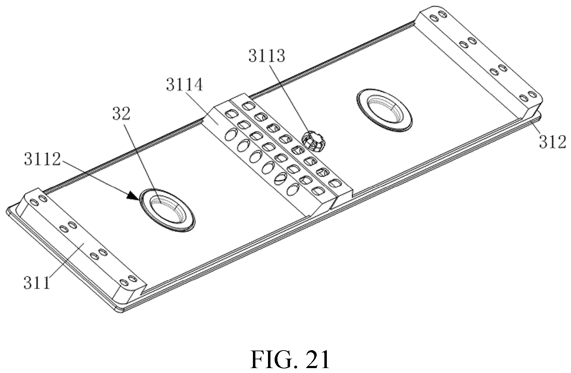

Referring to FIGS. 16 and 19 to 21, the case structure 10 includes the case 1 and the top cover 312, the case 1 is provided with an opening on one side in the first direction; the top cover 312 is fixed at the opening of the case 1 to fit around the case 1 to form the cavity 1A. the side of the core 2 on which the tabs 21 are provided is facing the top cover 312, and the first covering portion 3011 is located between the top cover 312 and the core 2. The first insulating film 301 is located between the top cover 312 and the core 2. Specifically, the first insulating film 301 can be selectively fixed to the core 2 and then fixedly connected to the top cover 312 during assembly. Alternatively, the first insulating film 301 can be selectively fixed to the top cover 312 and then fixed to the core 2. The first insulating film 301 is not limited herein, and can be correspondingly adjusted according to the specific production line.

Further, the core 2 includes two first side surfaces 5 arranged oppositely in the third direction and two second side surfaces 6 arranged oppositely in the second direction, and the two first side surfaces 5 and the two second side surfaces 6 are alternately connected in sequence. The second covering portion 3012 covers at least one of the first side surfaces 5 or the second side surfaces 6.

It should be noted that any two of the first direction, the second direction, and the third direction intersect with each other. That is, the angle of intersection between the first direction, the second direction, and the third direction is not limited, and may be 90, 85, or 80 degrees. In the preferred embodiment of the present application, the angle between the first direction and the second direction and the third direction is set at 90 degrees, and the angle between the second direction and the third direction is set at 90 degrees.

As can be seen from the above, the core 2 is arranged in a square shape, and the second covering portion 3012 on the first insulating film 301 can cover the first side surfaces 5 or the second side surfaces 6 after the first covering portion 3011 of the first insulating film 301 covers one side on which the tabs 21 are arranged. Since the first side surfaces 5 and the second side surfaces 6 are arranged to be flat, the second covering portion 3012 can be easily flattened on the first side surfaces 5 or the second side surfaces 6.

Specifically, the second covering portion 3012 includes two second sub-covering portions 320. The two second sub-covering portions 320 cover the two first side surfaces 5 or the two second side surfaces 6, respectively. That is, in one embodiment of the present application, the two second sub-covering portions 320 respectively cover the two first side surfaces 5, and the two second sub-covering portions 320 are respectively located on two sides of the first cover 3011 in the third direction so as to cooperate to form the U-shaped structure to completely cover the tabs 21. In another embodiment of the present application, the two second sub-covering portions 320 respectively cover the two second side surfaces 6, and the two second sub-covering portions 320 are respectively located on two sides of the first cover 3011 in the second direction so as to cooperate to form the U-shaped structure to completely cover the tabs 21. Referring to FIG. 1, in the specific embodiment of the present application, the two second sub-covering portions 320 are respectively located on the two sides of the first cover 3011 in the third direction.

Of course, the size of the first insulating film 301 is not limited. As shown in FIG. 16, in one embodiment of the present application, the second covering portion 3012 on the first insulating film 301 covers the first side surfaces 5. Define the length of the first insulating film 301 in the second direction as L and the thickness of the first insulating film 301 in the first direction as D, where L and D satisfy 215mm≤L≤225mm; and 0.07mm≤D≤0.09mm. The value of L may be 215mm, 220mm, 225mm; the value of D may be 0.07mm, 0.08mm, 0.09mm. If L is smaller than 215mm, it is impossible to ensure that the first covering portion 3011 can completely cover the tabs 21, and if L is larger than 225mm, the length of the first insulating film 301 in the second direction is too long, thereby affecting the assembly of other components. If D is smaller than 0.07mm, the insulating effect of the first insulating film 301 is affected. And if D is larger than 0.09mm, the overall thickness of the battery is affected. In the particular embodiment of the present application, L is 220mm and D is 0.08mm.

In an embodiment of the present application, the battery further includes the lower plastic part 311 fixed to the side of the top cover 312 facing the cavity 1A. The first covering portion 3011 is located between the lower plastic part 311 and the core 2. The first covering portion 3011 is disposed between the lower plastic part 311 and the core 2, so that the assembly of the first insulating film 301 in the battery can be facilitated.

Further, the battery further includes the connecting pieces 34 connected to the ends of the tabs 21 away from the core 2 in the first direction, the connecting pieces 34 being located between the first covering portion 3011 and the core 2. By providing the connecting pieces 34 between the first covering portion 3011 and the core 2, that is, after the battery is assembled, the first insulating film 301 also wraps the connecting pieces 34, so as to prevent the connecting pieces 34 from contacting with the case 1 and causing the short circuit.

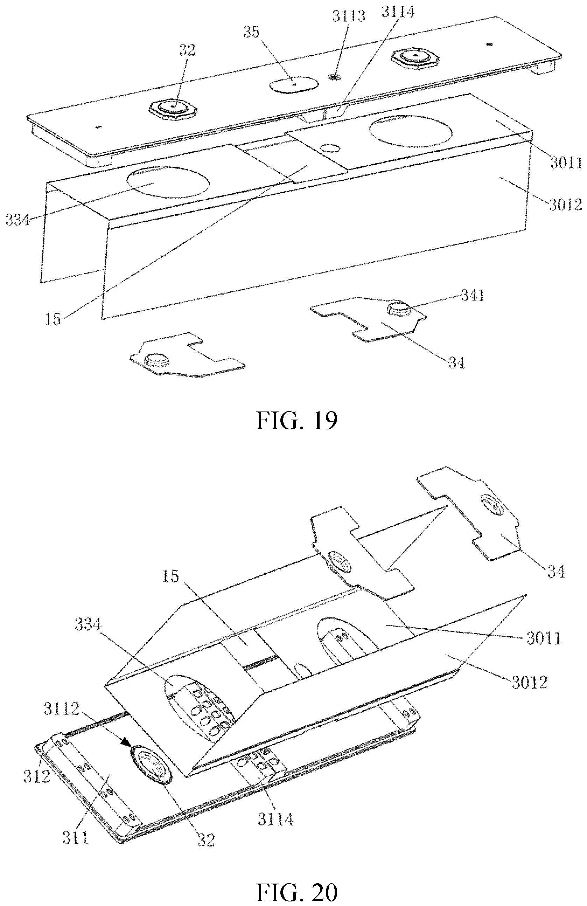

Referring again to FIGS. 19 to 21, the top cover 312 is provided with the terminals 32, the lower plastic part 311 is provided with through holes 3112 extending in the first direction, and the first covering portion 3011 is provided with clearance holes 334 extending in the first direction, the clearance holes 334 communicating with the through holes 3112. The connecting pieces 34 each include the convex portion 341 passing through the clearance hole 334 and the through hole 3112 and connected to the terminal 32. In the present embodiment, in order to prevent the first covering portion 3011 and the lower plastic part 311 from affecting the connection between the terminals 32 and the connecting pieces 34, the first covering portion 3011 is provided with the clearance holes 334, and the lower plastic part 311 is provided with the through holes 3112 to avoid the connection between the convex portions 341 on the terminals 32 and the terminals 32.

Referring to FIGS. 19 to 21, it will be appreciated that the top cover 312 is further provided with an explosion-proof valve 35 and an injection hole 3113 away from the core 2, and the lower plastic part 311 is provided with the convex portion 3114 at the position corresponding to the explosion-proof valve 35, so that the first insulating film 301 is further provided with the groove 15 as a clearance for the connection of the explosion-proof valve 35 and the injection hole 3113.

Further, the first covering portion 3011 is fixed to the lower plastic part 311. Define the contact area between the first covering portion and the lower plastic part 311 fixed with respect to each other as A, and A satisfies: 28.5mm2≤A≤42mm2. The fixing manner between the first covering portion 3011 and the lower plastic part 311 is not limited. The first covering portion 3011 and the lower plastic part 311 may be bonded, clamped, or welded. Specifically, in one embodiment of the present application, the first covering portion 3011 is connected to the lower plastic part 311 by hot melting, that is, by adjusting the pulse fusion parameter of the hot melting device, so that the first covering portion 3011 is fused to the lower plastic part 311, and the contact area between the first covering portion and the lower plastic part 311 is the area of the first covering portion which is fused to the lower plastic part 311. If A is smaller than 28.5mm2, the first insulating film 301 is easily detached from the lower plastic part 311. If A is larger than 42mm2, the fusion area of the first insulating film 301 is excessively large, which affects the welding assembly of components such as the tabs 21. Specifically, A may be 9.5*3mm, 10.0*3.5mm, or 10.5*4mm.

Based on the same concept, the present embodiment provides the battery assembly method for assembling the battery according to Embodiment 1, the assembling steps include:

Step S1: assembling the cover assembly 3, where the cover assembly 3 includes the cover body 31 and the spacer that can be fixed with respect to each other, the spacer protrudes from the cover body 31 along at least one side of the cover body 31 to form the extending portions 332;

Specifically, with reference to Embodiment 1, the cover assembly 3 may specifically include the cover body 31, the terminals 32, the spacer, and an explosion-proof valve 35. The cover assembly 3 may also optionally include the connecting pieces 34. The cover body 31 may specifically include the lower plastic part 311 and the top cover 312, and the cover body 31 may also optionally include the upper plastic part 313. The spacer may include the insulating adhesive tape 33, and the insulating adhesive tape 33 may include the connecting portion 331 and two extending portions 332, that is, the extending portions 332 are formed on the insulating adhesive tape 33.

As an example, the lower plastic part 311 may be adhesively fixed to the lower surface of the top cover 312. When the upper plastic part 313 is used to separate the terminals 32 from the top cover 312, the upper plastic part 313 needs to be mounted to the top cover 312. In this way, the lower plastic part 311 and the upper plastic part 313 may be integrally formed or may be fastened with respect to each other to be mounted to the top cover 312, that is, by stacking the lower plastic part 311, the top cover 312 and the upper plastic part 313 to constitute the cover body 31. The terminals 32 are disposed to pass through the upper plastic part 313, the top cover 312, and the lower plastic part 311, and the explosion-proof valve 35 is mounted to the top cover 312. The insulating adhesive tape 33 is connected to one side of the lower plastic part 311 facing the core 2. Specifically, the connecting portion 331 in the insulating adhesive tape 33 is connected to the lower surface of the lower plastic part 311, and the two extending portions 332 in the insulating adhesive tape 33 protrude from two sides in the width direction of the lower plastic part 311.

Thus, the assembly of the cover assembly 3 is completed. Note that, when the cover assembly 3 further includes the connecting pieces 34, in order to facilitate the welding operation of the connecting pieces 34, the tabs 21, and the terminals 32, the connecting pieces 34 needs to be mounted later, that is, the assembly of the main body portion of the cover assembly 3 is completed first.

Step S2: welding the tabs 21 on the core 2 to the cover assembly 3. Specifically, when there is no connecting piece 34, the tabs 21 are welded to the terminals 32, preferably by laser welding. When the connecting pieces 34 are used as an intermediate piece, the connecting pieces 34 are welded to the tabs 21 and then to the terminals 32 in turn, and similarly, preferably by laser welding. It can be understood that the connecting pieces 34 may be laser welded to the tabs 21 on the core 2 to form a connecting piece-core semi-finished product, and then the connecting pieces 34 in the connecting piece-core semi-finished product are laser welded to the terminals 32.

Step S3: bending the extending portions 332 of the spacer toward the core 2 so that the extending portions 332 contact with the side surfaces of the core 2 to cover at least one outer side of the tabs 21 with the spacer. Specifically, the extending portions 332 are fixed to the side surfaces of the core 2 by adhesive.

Specifically, the two extending portions 332 of the insulating adhesive tape 33 are bent toward the core 2, so that the two extending portions 332 are respectively attached to the two opposite outer sides of the core 2, and are fixed by the adhesive to wrap the tabs 21 in the width direction (i.e., the third direction) by the insulating adhesive tape 33. When the connecting pieces 34 are present, the connecting pieces 34 may be wrapped to form the cover assembly-core semi-finished product;

Step S4: the case 1 is assembled so that at least a part of each extending portion 322 is positioned between the side surface of the core 2 and the inner side wall of the case 1, so that the tabs 21 and the case 1 are separated, and when the connecting pieces 34 are present, the connecting pieces 34 and the case 1 can be separated. Specifically, the cover assembly-core semi-finished product is inserted into the case 1, in which the core 2 first enters the case 1, and the cover assembly 3 is sealed at the opening of the case 1, and the top cover 312 is welded to the case 1. At this time, the lower end of each extending portion 322 is located between the side surface of the core 2 and the inner side wall of the case 1, and the upper end of each extending portion 322 is located between the tabs 21 and the inner side wall of the case 1.

This completes the assembly of the battery.

In step S3, it is preferable that the step of bending the extending portions 332 includes rotating the bending baffles 314, causing the extending portions 332 to be bent toward the core 2 by the baffles 314, and fixing the baffles 314 to the lower plastic part 311 so as to wrap the tabs 21 in the width direction (i.e., in the third direction) of the lower plastic part 311 by the insulating adhesive tape 33 and the baffles 314, while also wrapping the connecting pieces 34.

On the other hand, based on the fixing scheme (1) and the fixing scheme (2) of the Embodiment 1 with respect to the "fixing the insulating adhesive tape 33 on and with respect to the lower plastic part 311", the mounting method of the insulating adhesive tape 33 needs to be correspondingly adjusted when the insulating adhesive tape 33 is mounted.

Based on the fixing scheme (1) in Embodiment 1, in step S1, the insulating adhesive tape 33 is attached to the side of the lower plastic part 311 facing the core 2 by hot-melting. Specifically, the mounting step of the insulating adhesive tape 33 on the lower plastic part 311 includes: hot-melt bonding a part of the insulating adhesive tape 33 with the lower plastic part 311, and making two opposite sides of the insulating adhesive tape 33 protrude from the lower plastic part 311 in the width direction (i.e., the third direction) of the lower plastic part 311 to form two extending portions 332. As an example, after the insulating adhesive tape 33 contacts with the lower plastic part 311 (specifically, the connecting portion 331 contacts with the lower surface of the lower plastic part 311), the insulating adhesive tape 33 is heated by the heat source, so that the heated regions on the insulating adhesive tape 33 are melted to form four hot melt sites 36, which are arranged symmetrically with respect to the center axis of the insulating adhesive tape 33 so as to fix the insulating adhesive tape 33 on and with respect to the lower plastic part 311 at the four hot melt sites 36. Of course, for the description of the number and type of hot melt sites 36, reference may be made to Embodiment 1, which will not be repeated in this Embodiment.

Based on the fixing scheme (2) in the Embodiment 1, it is necessary to combine the steps S1 and S2 so as to clamp and fix the insulating adhesive tape 33 to the lower plastic part 311 by the connecting pieces 34. Specifically, the mounting step of the insulating adhesive tape 33 on the lower plastic part 311 includes: first completing the assembly of the main body portion of the cover assembly 3, and laser welding the connecting pieces 34 to the tabs 21 on the core 2 to constitute the connecting piece-core semi-finished product. The connecting pieces 34 in the connecting piece-core semi-finished product pass through the lower plastic part 311 and are laser-welded to the terminals 32. A part of the insulating adhesive tape 33 is clamped and fixed to the lower plastic part 311 by the connecting pieces 34, and two opposite sides of the insulating adhesive tape 33 protrude from the lower plastic part 311 in the width direction (i.e., the third direction) of the lower plastic part 311 to form two extending portions 332. As an example, the lower plastic part 311 is provided with the through holes 3112, the insulating adhesive tape 33 is provided with the clearance holes 334, and the connecting pieces 34 has the convex portions 341. When the connecting portion 331 of the insulating adhesive tape 33 contacts with the lower surface of the lower plastic part 311 integrated in the main body portion of the cover assembly 3, the clearance holes 334 are positioned to respectively correspond to the through holes 3112, so that pre-positioning is completed. And the convex portions 341 of the connecting pieces 34 in the semi-finished product of the connecting piece-core are sequentially pass through the respective clearance holes 334 and the respective through holes 3112, so that after the convex portions 341 correspond to the respective terminals 32, the convex portions 341 are welded and fixed to the terminals 32. At this time, the flat plate portion of each connecting piece 34, which is configured to be welded with the tabs 21, is clamped on the side of the insulating adhesive tape 33 facing away from the lower plastic part 311, and is specifically clamped on the lower surface of the connecting portion 331. In this way, it is realized that the insulating adhesive tape 33 is clamped and fixed to the lower plastic part 311 by the connecting pieces 34.

It should be noted that there may be a plurality of cores 2, for example, if there are two cores 2, the two cores 2 need to be wrapped together.

In summary, according to the cover assembly 3 provided in Embodiment 1 of the present application and the battery assembly method provided in Embodiment 1 of the present application, the present invention has the advantages of good insulation protection effect and high safety: the spacer is provided on the cover body 31, and the spacer can be attached to at least one side surface of the core 2, so that the spacer is used for insulation protection of the tabs 21, so that chemical corrosion caused by short circuit of the tabs 21 in contact with the case 1 can be effectively prevented. At the same time, the spacer is not easy to expose the tabs 21 due to malfunction of the adhesive, thereby improving the battery safety performance and solving the problem of insufficient insulation protection of the battery in the prior art. In particular, in the width direction (i.e., the third direction) of the lower plastic part 311, the two extending portions of the insulating adhesive tape 33 are attached to the two opposite sides of the core 2 to wrap the tabs 21, and the connecting pieces 34 can be wrapped to further improve the overall insulating effect. The present invention has the advantages of dual protections, high assembly efficiency, and good flatness: by combining the dual protections of the insulating adhesive tape 33 and of the baffles 314, the contact of the tabs 21 and the connecting pieces 34 with the case 1 can be better prevented, and the influence of the failure of the insulating adhesive tape 33 on the insulation protection performance can be avoided. At the same time, the baffles 314 can shield the outer side of the extending portions 332 of the insulating adhesive tape 33, thereby reducing or avoiding the outward curvature of the insufficiently bent extending portions 332 during the assembly process. In addition, the extending portions 332 can be bent by the baffles 314 during the assembly process, and the bent extending portions 332 are limited by the baffles 314, thereby improving the assembly efficiency and flatness.

Based on the same concept, the present embodiment also provides the battery assembly method for assembling the battery according to Embodiment 3, the assembling steps include:

Step S4: providing the top cover 312 and the first insulating film 301, and fixing the first insulating film 301 to the top cover 312 to form the cover assembly.

It will be appreciated that the assembly of the top cover 312 and the lower plastic part 311 is completed and the terminals 32 and the explosion-proof valve 35 have been mounted on the top cover 312 before the step of fixing the first insulating film 301 to the top cover 312. The assembly manner of the top cover 312 and the lower plastic part 311 is not limited, and the two may be glued or snap fit. Therefore, the first insulating film 301 is assembled to the lower plastic part 311 on the top cover 312.

The fixing of the first insulating film 301 on the lower plastic part 311 is not limited. The first insulating film 301 and the lower plastic part 311 may be bonded, clamped, or welded together. Specifically, in this embodiment, the first insulating film 301 and the lower plastic part 311 are hot-melted, that is, by adjusting the pulse fusion parameter of the hot-melt device, so that the first covering portion 3011 is fused onto the lower plastic part 311. Further, in this embodiment, the fusion area between the first covering portion 3011 and the lower plastic part 311 is 10.0*3.5mm.

Of course, the size of the first insulating film 301 is not limited, and in this embodiment, the width of the first insulating film 301 is 220mm and the thickness of the first insulating film 301 is 0.08mm in order to ensure that the first insulating film 301 can completely cover the tabs 21 and the connecting pieces 34. Referring to FIG. 16, the width direction of the first insulating film 301 is the second direction, and the thickness direction of the first insulating film 301 is the first direction.

Step S5: the connecting pieces 34 are provided, the connecting pieces 34 are fixed to the cover assembly.

Specifically, in the assembled cover assembly, the lower plastic part 311 is provided with the through holes 3112, the first insulating film 301 is provided with the clearance holes 334, and the connecting pieces 34 are provided on the side of the first insulating film 301 away from the top cover 312. The connecting pieces 34 include the convex portions 341, which sequentially penetrate through the respective clearance holes 334 and the respective through holes 3112 so as to be connected to the respective terminals 32. The operation process is as follows: the top cover 312 to which the first insulating film 301 is fixed is placed on the horizontal table of the laser welding apparatus, and the connecting pieces 34 are placed above the top cover 312, the laser welding parameter is adjusted, and the connecting pieces 34 and the terminals 32 are welded.

Further, the top cover 312 is provided with the explosion-proof valve 35 and the injection hole 3113, and the lower plastic part 311 is provided with the convex portion 3114 at the position corresponding to the explosion-proof valve 35. Therefore, the first insulating film 301 is provided with the groove 15 as a clearance for the explosion-proof valve 35 and the injection hole 3113.

Step S6: providing the core 2, at least partially flattening the first insulating film 301 on the outer surface of the core 2.

Specifically, the core 2 is provided with the tabs 21, and the first insulating film 301 includes the first covering portion 3011 and the second covering portion 3012, and the portion of the first insulating film 301 flattened on the outer surface of the core 2 is the second covering portion 3012. When the second covering portion 3012 covers the outer surface of the core 2, the connecting pieces 34 are connected to the tabs 21, and the first covering portion 3011 on the first insulating film 301 covers the tabs 21.

In this case, in order to further improve the covering effect of the first insulating film 301 on the tabs 21, the second covering portion 3012 includes two second sub-covering portions 320. Referring to FIG. 16, the two second sub-covering portions 320 are respectively located on two sides of the first covering portion 3011 in the third direction.

In this way, when the top cover 312 is assembled with the core 2, the first insulating film 301 can be made to wrap the connecting pieces 34 so as to avoid short circuit caused by the contact of the connecting pieces 34 with the case 1.

Step S7: providing the second insulating film 4 and wrapping the second insulating film 4 at an outer surface of the core 2, where at least a part of the first insulating film 301 is located between the second insulating film 4 and the core 2.

It will be appreciated that the second insulating film 4 wraps the core 2, so that an insulating arrangement between the core 2 and the case structure 10 can be realized. On this basis, the second insulating film 4 can also wrap a part of the second covering portion 3012 to realize fixing of the first insulating film 301 with respect to the core 2, so that the first insulating film 301 is immersed in the electrolyte for the long time without the risk of falling off.

Step S8: providing the case 1, and the case 1, the core 2, and the top cover 312 are assembled.

Specifically, the assembly of the battery is completed by placing the core 2 into the cavity 1A formed in the case 1 and welding the top cover 312 and the case 1.

**Claims**

1. A cover assembly comprising:

   a cover body (31);
   a spacer disposed on the cover body (31), the spacer being configured to separate one or more tabs (21) on a core (2) from a case (1).

2. The cover assembly according to claim 1, the spacer being configured to contact with at least one side surface of the core (2) such that the one or more tabs (21) on the core (2) are separated from the case (1).

3. The cover assembly according to claim 2, wherein the cover body (31) comprises a lower plastic part (311), and the spacer is disposed on a side of the lower plastic part (311) configured to face toward the core (2).

4. The cover assembly according to claim 3, wherein the spacer comprises an insulating adhesive tape (33), and two sides of the insulating adhesive tape (33) are configured to be bent toward the core (2) and contact with two opposite sides of the core (2) in a third direction.

5. The cover assembly according to claim 4, wherein the insulating adhesive tape is hot-melt to be connected to the lower plastic part (311).

6. The cover assembly according to claim 5, wherein a plurality of hot melt sites (36) are formed on the insulating adhesive tape (33), the hot melt sites (36) being configured to fuse and fix the insulating adhesive tape (33) and the lower plastic part (311) with respect to each other.

7. The cover assembly according to claim 6, wherein at least four hot melt sites (36) are provided and arranged symmetrically with respect to a central axis of the insulating adhesive tape (33).

8. The cover assembly according to claim 4, further comprising one or more connecting pieces (34) configured to conductively connect with the tabs (21), each connecting piece (34) being fixed with respect to the lower plastic part (311), and the insulating adhesive tape (33) being configurable to separate the one or more connecting pieces (34) and the case (1).

9. The cover assembly according to claim 8, wherein the one or more connecting pieces (34) are connected to the lower plastic part (311), and the one or more connecting pieces (34) clamp and fixe the insulating adhesive tape (33) to the lower plastic part (311).

10. The cover assembly according to claim 9, wherein the lower plastic part (311) is provided with one or more through holes (3112), the insulating adhesive tape (33) is provided with one or more clearance holes (334) corresponding to the one or more through holes (3112), and the one or more connecting pieces (34) have one or more convex portions (341) configured to be welded and fixed to one or more terminals (32), the one or more convex portions (341) penetrating the one or more clearance holes (334) and the one or more through holes (3112).

11. The cover assembly according to any one of claims 4 to 9, wherein the insulating adhesive tape (33) comprises a connecting portion (331) and two extending portions (332), the connecting portion (331) attaches one side of the lower plastic part (311), the two extending portions (332) are connected to two opposite sides of the connecting portion (331) respectively in the third direction, and the two extending portions (332) are configured to contact with two opposite sides of the core (2) after bending.

12. The cover assembly according to claim 11, wherein each extending portion (332) is provided with a fixing adhesive configured to be attached to the core (2).

13. The cover assembly according to claim 11, wherein a bending line (333) is pre-provided between the connecting portion (331) and each extending portion (332).

14. The cover assembly according to claim 11, wherein in a second direction, a length of the extending portion (332) is adapted to a length of the lower plastic part (311).

15. The cover assembly according to claim 11, wherein in the third direction, at least one side of the lower plastic part (311) is further provided with one or more baffles (314), each baffle (314) abutting against an outside of the extending portion (332), so that each tab (21) is separate from the case (1).

16. The cover assembly according to claim 15, wherein the lower plastic part (311) is integrally formed with the one or more baffles (314), and a connection between each baffle (314) and the lower plastic part (311) being provided with a weak region and/or discontinuous apertures, so that the baffle (314) is rotated and bent toward the core (2) around the connection between the baffle (314) and the lower plastic part (311).

17. The cover assembly according to claim 16, wherein the baffle after the rotation and bending is fastened to the lower plastic part (311).

18. The cover assembly according to claim 15, a part of each baffle (314) is capable of contacting with a side of the core (2).

19. The cover assembly according to claim 1, wherein the spacer comprises an insulator (30), the insulator (30) comprising:

    a main body portion (3110) having a first surface (3101) configured to face toward the core (2); one or more protective portions (3120) connected to at least one side of the main body portion (3110) in a third direction, the one or more protective portion (3120) and the first surface (3101) forming one or more first spaces (318) configured to accommodate the one or more tabs (21) on the core (2), each protective portion (3120) being configurable to be located between an inner side wall of the case (1) and the one or more tabs (21) such that the one or more tabs (21) are separated from the case (1).

20. The cover assembly according to claim 19, wherein at least two protective portions (3120) are provided, and the protective portions (3120) are respectively connected to two opposite sides of the main body portion (3110) in the third direction.

21. The cover assembly according to claim 20, wherein the main body portion (3110) and the protective portions (3120) are integrally formed, and each protective portion (3120) is configured to bend toward the core (2) around a connection with the main body portion (3110) so as to cover two opposite sides of each tab (21).

22. The cover assembly according to claim 21, wherein the connection of the protective portion (3120) and the main body portion (3110) is provided with a weak region and/or discontinuous apertures.

23. The cover assembly according to claim 22, wherein an extending direction of the weak region and/or the discontinuous apertures is parallel to a longitudinal direction of the main body portion (3110).

24. The cover assembly according to claim 21, wherein in a second direction, two ends of the main body portion (3110) are both provided with a pressing-holding portion (3131) protruding from the first surface (3101).

25. The cover assembly according to claim 24, wherein each protective portion (3120) after bending is fastened to the pressing-holding portion (3131) at a corresponding end of the main body portion (3110).

26. The cover assembly according to claim 25, wherein one of the protective portion (3120) and the pressing-holding portion (3131) is provided with a hook fastener (3141), and the other of the protective portion (3120) and the pressing-holding portion (3131) is provided with a block fastener (3111).

27. The cover assembly according to any one of claims 19 to 26, wherein the central part of the main body portion (3110) is provided with a case body portion (316) corresponding to an explosion-proof valve (35), the main body portion (3110) is provided with two protective portions (3120) on each side in the third direction, and the two protective portions (3120) on the same side are located on two opposite sides of the case body portion (316).

28. The cover assembly according to claim 19, further comprising one or more bus bars (340) configured to be welded to the one or more tabs (21), each bus bar (340) being located in a corresponding one of the one or more first spaces (318) of the insulator (30), each protective portion (3120) on the insulator (30) being configurable to be located between an inside wall of the case (1) and a corresponding one of the one or more bus bars (340) so that the bus bar (340) is separate from the case (1).

29. The cover assembly according to claim 10, further comprising a top cover (312), the one or more terminals (32) and an explosion-proof valve (35), the top cover (312) being configured to be fixedly connected to the case (1), the insulator (30) being provided on a side of the top cover (312) facing the core (2), the one or more terminals (32) and the explosion-proof valve (35) being provided on the top cover (312), the one or more terminals (32) being welded to the one or more bus bars (340).

**30.** The cover assembly according to any one of claims 19 to 26, wherein an end of each protective portion (3120) on the insulator (30) abuts against a side surface of the core (2) facing the insulator (30), or a part of each protective portion (3120) on the insulator (30) abuts against a side surface of the core (2) in the third direction.

**31.** The cover assembly according to claim 1, wherein the spacer comprises a first insulating film (301) located between a wall of a cavity (1A) of a case structure (10) and the core (2), the first insulating film (301) comprising a first covering portion (3011) and a second covering portion (3012) connected to each other, the first covering portion (3011) covering the one or more tabs (21), the second covering portion (3012) covering at least part of the core (2);

the cover assembly (3) further comprises a second insulating film (4) wrapping on an outer surface of the core (2);
wherein the second covering portion (3012) is located between the core (2) and the second insulating film (4).

**32.** The cover assembly according to claim 31, wherein the case structure (10) comprises a top cover (312) and the case (1), the case (1) being provided with an opening on one side in a first direction, the top cover (312) being fixed at the opening of the case (1) to fit around the case (1) to form the cavity (1A);
wherein one side of the core (2) provided with the one or more tabs (21) faces the top cover (312), and the first covering portion (3011) is located between the top cover (312) and the core (2).

**33.** The cover assembly according to claims 31 or 32, wherein the second insulating film (4) completely wraps the second covering portion (3012); or, the second insulating film (4) wraps at least part of the second covering portion (3012).

**34.** The cover assembly according to claim 31 or 32, wherein the core comprises two opposite first side surfaces (5) arranged in a third direction and two opposite second side surfaces (6) arranged in a second direction, the two first side surfaces (5) and the two second side surfaces (6) being connected alternately in sequence;
wherein the second covering portion (3012) covers at least one of: the first side surfaces (5) or the second side surfaces (6), and any two of the first direction, the second direction, and the third direction intersect each other.

**35.** The cover assembly according to claim 34, wherein the second covering portion (3012) comprises two second sub-covering portions (320);

wherein the two second sub-covers covering portions cover the two first side surfaces (5) or the two second side surfaces (6) respectively.

**36.** The cover assembly according to claim 34, wherein the second covering portion (3012) covers at least one of the first side surfaces (5);
by defining a length of the first insulating film (301) in the second direction as L and a thickness of the first insulating film (301) in the first direction as D, L and D satisfy:

$$215mm \leq L \leq 225mm;$$

and

$$0.07mm \leq D \leq 0.09mm.$$

**37.** The cover assembly according to claim 32, further comprising a lower plastic part (311) fixed to a side of the top cover (312) facing the cavity (1A);
wherein the first covering portion (3011) is located between the lower plastic part (311) and the core (2).

**38.** The cover assembly according to claim 37, further comprising one or more connecting pieces (34) each connected to an end of a corresponding one of the one or more tabs (21) away from the core (2) in the first direction, each connecting piece (34) being located between the first covering portion (3011) and the core (2).

**39.** The cover assembly according to claim 38, wherein the top cover (312) is provided with one or more terminals (32), the lower plastic part (311) is penetrated and provided with one or more through holes (3112) extending in the first direction, the first covering portion (3011) is provided with one or more clearance holes (334) extending in the first direction, and the one or more clearance holes (334) communicate with the one or more through holes (3112) respectively;
wherein the one or more connecting piece (34) comprises one or more convex portions (341) respectively penetrate the one or more clearance holes (334) and the one or more through holes (3112) and connect to the one or more terminals (32).

**40.** The cover assembly according to claim 37, wherein the first covering portion (3011) is fixed to the lower plastic part (311); a contact area between the first covering portion (3011) and the lower plastic portion (311) fixed with respect to each other is defined as A and A satisfies: $28.5mm^2 \leq A \leq 42mm^2$.

**41.** A battery comprising a case (1), a core (2) and a cover assembly (3) according to any one of claims 1 to 40, the core (2) being provided in the case (1), the cover assembly (3) being provided at an end of the case (1), the spacer in the cover assembly (3) being configured to separate the one or more tabs (21) on the core (2) from the case (1).

42. A battery assembly method comprising:

assembling a cover assembly (3), wherein the cover assembly (3) comprises a cover body (31) and a spacer capable of being fixed with respect to each other, the spacer protruding from the cover body (31) along at least one side of the cover body (31) to form one or more extending portions (332);
welding one or more tabs (21) on a core (2) to the cover assembly (3);
bending each extending portion (332) of the spacer toward the core (2) so that the extending portion (332) contacts with a side surface of the core (2) to shield at least one outer side of a corresponding one of the one or more tabs (21) with the spacer;
assembling a case (1) so that at least a part of the extending portion is located between the side surface of the core and an inner side wall of the case such that the tab (21) is separated from the case (1).

43. The battery assembly method according to claim 42, wherein each extending portion (332) is fixed to the side surface of the core (2) by adhesive.

44. The battery assembly method according to claim 42, wherein the cover body (31) comprises a lower plastic part (311), the spacer comprises an insulating adhesive tape (33), and the insulating adhesive tape (33) is formed with the one or more extending portions (332), wherein the insulating adhesive tape (33) is connected to one side of the lower plastic part (311) facing toward the core (2) by hot melting.

45. The battery assembly method according to claim 44, wherein after the insulating adhesive tape (33) contacts with the lower plastic part (311), the insulating adhesive tape (33) is heated by a heat source, so that heated regions on the insulating adhesive tape (33) are melted to form a plurality of hot melt sites (36) such that the insulating adhesive tape (33) and the lower plastic part (311) are fused and fixed with respect with each other at the hot melt sites (36).

46. The battery assembly method according to claim 45, at least four hot melt sites (36) are provided, the hot melt sites (36) being arranged symmetrically with respect to a central axis of the insulating adhesive tape (33).

47. The assembly method according to claim 42, wherein the cover body (31) comprises a lower plastic part (311), the spacer comprises a first insulating film (33), the first insulating film (33) is formed with the one or more extending portions (332), and the first insulating film (33) is clamped and fixed to the lower plastic part (311) by one or more connecting pieces (34).

48. The assembly method according to claim 47, wherein each connecting piece (34) is firstly welded to a corresponding one of the one or more tabs (21) and then to a corresponding one of one or more terminals (32) in the cover assembly (3).

49. The assembly method according to any one of claims 44 to 48, wherein in a third direction, at least one side of the lower plastic part (311) is further provided with one or more baffles, and a connection of each baffle and the lower plastic part (311) is provided with a weak region and/or discontinuous apertures; wherein,
the step of bending the extending portion comprises: rotating and bending a corresponding one of the one or more baffles (314), the baffle (314) causing the extending portion (332) to be bent toward the core (2), and fixing the baffle (314) with respect to the lower plastic part (311) so as to wrap the tab (21) in the third direction by the insulating adhesive tape (33) and the baffle (314).

third direction

FIG. 1

FIG. 2

FIG. 3

FIG. 4

FIG. 5

FIG. 6

FIG. 7

3

FIG. 8

33

334    332    333    334    331

third direction
second
direction

FIG. 9

312    313    32    340    3110    21
3
3120                                        3120
318

2

1

FIG. 10

FIG. 11

FIG. 12

FIG. 13

FIG. 14

EP 4 496 112 A1

FIG. 15

FIG. 16

FIG. 17

FIG. 18

FIG. 19

FIG. 20

FIG. 21

## INTERNATIONAL SEARCH REPORT

| International application No. |
| --- |
| **PCT/CN2024/085122** |

**A.    CLASSIFICATION OF SUBJECT MATTER**

H01M50/586(2021.01)i;  H01M50/593(2021.01)i;  H01M50/15(2021.01)i

According to International Patent Classification (IPC) or to both national classification and IPC

**B.    FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT; CNABS; CNKI; WPABS; DWPI; WOTXT; EPTXT; USTXT: 电池, 盖, 极耳, 隔, 绝缘, 壳, 塑胶, 熔, battery, cell, tab, shell, contact, insulat+, plastic, cover

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 219739256 U (HUBEI EVE POWER CO., LTD.) 22 September 2023 (2023-09-22) description, paragraphs [0003]-[0063], and figures 1-6 | 1-2, 19-30, 41 |
| PX | CN 219739247 U (HUBEI EVE POWER CO., LTD.) 22 September 2023 (2023-09-22) description, paragraphs [0004]-[0102], and figures 1-9 | 1-30, 41-49 |
| X | CN 105633310 A (CONTEMPORARY AMPEREX TECHNOLOGY CO., LTD.) 01 June 2016 (2016-06-01) description, paragraphs [0005]-[0070], and figures 1-5 | 1-18, 31-49 |
| X | CN 217507574 U (RISESUN MGL NEW ENERGY TECHNOLOGY CO., LTD.) 27 September 2022 (2022-09-27) description, paragraphs [0003]-[0068], and figures 1-9 | 1-2, 19-30, 41 |
| X | CN 108649149 A (DO-FLUORIDE (JIAOZUO) NEW ENERGY TECHNOLOGY CO., LTD.) 12 October 2018 (2018-10-12) description, paragraphs [0006]-[0060], and figures 1-10 | 1-2, 19-30, 41 |
| X | CN 214123987 U (XIAMEN HITHIUM NEW ENERGY TECHNOLOGY CO., LTD.) 03 September 2021 (2021-09-03) description, paragraphs [0003]-[0030], and figures 1-3 | 1-18, 31-49 |

| ✓ Further documents are listed in the continuation of Box C. | | ✓ See patent family annex. |
| --- | --- | --- |

|  | * | Special categories of cited documents: | "T" | later document published after the international filing date or priority date and not in conflict with the application but cited to understand the principle or theory underlying the invention |
| --- | --- | --- | --- | --- |
|  | "A" | document defining the general state of the art which is not considered to be of particular relevance | | |
|  | "D" | document cited by the applicant in the international application | "X" | document of particular relevance; the claimed invention cannot be considered novel or cannot be considered to involve an inventive step when the document is taken alone |
|  | "E" | earlier application or patent but published on or after the international filing date | | |
|  | "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
|  | "O" | document referring to an oral disclosure, use, exhibition or other means | "&" | document member of the same patent family |
|  | "P" | document published prior to the international filing date but later than the priority date claimed | | |

| Date of the actual completion of the international search | Date of mailing of the international search report |
| --- | --- |
| **29 April 2024** | **15 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/085122**

## C. DOCUMENTS CONSIDERED TO BE RELEVANT

| Category* | Citation of document, with indication, where appropriate, of the relevant passages | Relevant to claim No. |
|---|---|---|
| X | CN 208690317 U (DONGGUAN TAFEL NEW ENERGY TECHNOLOGY CO., LTD. et al.) 02 April 2019 (2019-04-02) description, paragraphs [0004]-[0038], and figures 1-3 | 1-18, 31-49 |
| X | CN 217589166 U (CALB GROUP CO., LTD.) 14 October 2022 (2022-10-14) description, paragraphs [0003]-[0051], and figures 1-3 | 1-18, 31-49 |

Form PCT/ISA/210 (second sheet) (July 2022)

INTERNATIONAL SEARCH REPORT

Information on patent family members

International application No.

**PCT/CN2024/085122**

| Patent document cited in search report | | | Publication date (day/month/year) | Patent family member(s) | | | Publication date (day/month/year) |
|---|---|---|---|---|---|---|---|
| CN | 219739256 | U | 22 September 2023 | None | | | |
| CN | 219739247 | U | 22 September 2023 | CN | 116470244 | A | 21 July 2023 |
| CN | 105633310 | A | 01 June 2016 | US | 2017279091 | A1 | 28 September 2017 |
| | | | | US | 10128472 | B2 | 13 November 2018 |
| | | | | CN | 109346628 | A | 15 February 2019 |
| | | | | CN | 109346628 | B | 02 October 2020 |
| CN | 217507574 | U | 27 September 2022 | None | | | |
| CN | 108649149 | A | 12 October 2018 | CN | 208521975 | U | 19 February 2019 |
| CN | 214123987 | U | 03 September 2021 | None | | | |
| CN | 208690317 | U | 02 April 2019 | None | | | |
| CN | 217589166 | U | 14 October 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310459818
- CN 202320919016
- CN 202320918966
- CN 202322683112